**Europäisches Patentamt**

**European Patent Office**

**Office européen des brevets**

(19)

(11) Veröffentlichungsnummer: **0 093 783**
**B1**

(12)

# EUROPÄISCHE PATENTSCHRIFT

(45) Veröffentlichungstag der Patentschrift:
19.03.86

(51) Int. Cl.⁴: **F 16 K 17/18, F 16 K 15/04**

(21) Anmeldenummer: **82103236.4**

(22) Anmeldetag: **16.04.82**

(54) Durchströmventil.

(43) Veröffentlichungstag der Anmeldung:
16.11.83 Patentblatt 83/46

(45) Bekanntmachung des Hinweises auf die Patenterteilung:
19.03.86 Patentblatt 86/12

(84) Benannte Vertragsstaaten:
AT BE CH DE FR GB IT LI LU NL SE

(56) Entgegenhaltungen:
FR - A - 1 442 238
FR - A - 2 266 079
US - A - 3 595 264
US - A - 3 707 981
US - A - 4 044 791

(73) Patentinhaber: Hellmeier & Weinlein Fabrik für
Oel-Hydraulik GmbH & Co. KG, Neumarkter Strasse 26,
D-8000 München 80 (DE)

(72) Erfinder: Brunner, Rudolf, Wankstrasse 23,
D-8011 Baldham (DE)

(74) Vertreter: Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)

## Beschreibung

Die Erfindung bezieht sich auf ein Durchströmventil mit einem Strömungsdurchgang, der einen Arbeitsströmungsweg und einen Rückströmungsweg aufweist, mit einer Rückschlagfunktion im Arbeitsströmungsweg, wobei der Arbeitsströmungsweg vom Arbeitsdruck freigegeben wird, und mit einer Druckbegrenzungsfunktion im Rückströmungsweg, wobei unterhalb einer bestimmten Druckgrenze der Rückströmungsweg gesperrt ist.

Derartige Durchströmventile werden häufig in einen Strömungskanal eingesetzt, der zu einem Verbraucher führt und in dem das Hydraulikmedium unter dem Arbeitsdruck in der einen Richtung und unter dem Rückströmdruck in der anderen Richtung strömt. Bei einem Anwendungsfall wird ein derartiges Durchströmventil in den Zylinderboden eines Hubzylinders bei einem Hubstapler eingesetzt, wobei es wichtig ist, daß in Arbeitsströmungsrichtung ein großer Durchgang und ein möglichst geringer Strömungswiderstand im Durchströmventil vorliegt, während in der Rückströmungsrichtung das Hydraulikmedium nur so lange abströmen darf, bis eine vorbestimmte Druckgrenze erreicht ist. Das Druckbegrenzungsventil hat dabei eine wichtige Sicherheitsfunktion, da es bei hängenbleibendem Hubelement des Hubstaplers verhindern muß, daß der Hubzylinder selbsttätig und allein durch das Gewicht seines Kolbens und seiner Kolbenstange einfährt, da dann nach Freikommen des Hubelementes dieses unkontrolliert rasch herunterfiele. Dabei ist auch in Rückströmrichtung ein möglichst großer Durchgangsquerschnitt wünschenswert. Der Durchgangsquerschnitt im Strömungsdurchgang wird dabei durch die Abmessungen des Strömungskanales nach oben begrenzt, so daß eine kompakte Konstruktion des Durchströmventils notwendig ist.

Ein solches Durchströmventil ist aus der FR-A-22 66 079 bekannt. Für die Rückschlagfunktion und die Druckbegrenzungsfunktion ist jeweils ein beweglicher Schließkörper mit einem ihm zugeordneten Ventilsitz vorgesehen, d.h. es liegen praktisch zwei voneinander unabhängige Ventile vor. Der Arbeitsströmungsweg verläuft innerhalb des Durchströmventils getrennt vom Rückströmungsweg, so daß die Durchgangsquerschnitte beider Wege bei gegebenen Außenab-messungen des Durchströmventils einander beschränken. Nachteilig ist ferner die funktionsnotwendige Federbelastung des Schließkörpers für die Rückschlagfunktion entgegengesetzt zur Strömungsrichtung der Arbeitsströmung, weil diese bei freigegebenem Arbeitsströmungsweg eine permanente Druckdifferenz über das Durchströmventil schafft, die durch den beschränkten Durchgangsquerschnitt des Arbeitsströmungsweges noch vergrößert wird.

Es ist deshalb Aufgabe der Erfindung, ein Durchströmventil der eingangs genannten Art zu schaffen, das baulich einfach und kompakt ist und darüber hinaus in beiden Strömungsrichtungen einen großen Durchgangsquerschnitt aufweist.

Die gestellte Aufgabe wird erfindungsgemäß dadurch gelöst, daß beide Funktionen von einem einzigen Schließkörper, der mit einer Dichtfläche zusammenarbeitet, ausgeübt werden, daß beide Strömungswege über diese gemeinsame Dichtfläche geführt sind, daß der Schließkörper aus seiner, den Arbeits- und den Rückströmweg sperrenden Sperrstellung vom Arbeitsdruck in Arbeitsströmungsrichtung in eine erste Offenstellung von der Dichtfläche wegbewegbar ist, in der er den Arbeitsströmungsweg freigibt, daß der Schließkörper aus seiner Sperrstellung vom Rückströmungsdruck in Rückströmungsrichtung gegen die Kraft einer Feder in eine zweite Offenstellung bewegbar ist, in der er den Rückströmungsweg freigibt, daß der Sohließkörper in seiner Sperrstellung an der Dichtfläche anliegt und mit der in Kontakt ist und daß in der Sperrstellung des Schließkörpers der Weg der Feder in Bewegungsrichtung des Schließkörpers zur ersten Offenstellung durch einen Anschlag begrenzt ist.

Bei dieser Ausbildung ist für die beiden Ventilfunktionen nur-mehr ein einziges Ventil, bestehend aus der Dichtfläche und dem Schließ-körper, verantwortlich. Es läßt sich der Durchgangsquerschnitt für beide Strömungswege optimal groß ausbilden. In Arbeitsströmungsrichtung wird der Schließkörper aus seiner Sperrstellung in seine erste Offenstellung bewegt, in der er den Arbeitsströmungsweg praktisch nicht nur ungedrosselt freigibt, sondern auch durch keine Federkraft mehr belastet ist. In Rückströmungsrichtung wird ergegen die Kraft der Feder in Richtung auf seine zweite Offenstellung hinbewegt, wie dies der herrschende Rückstromdruck vorgibt. Wenn der Rückstromdruck unter die bestimmte Druckgrenze abzusinken beginnt, bringt die Feder den Schließkörper in seine Sperrstellung mit der Dichtfläche, so daß er als in Rückströmungsrichtung sperrendes Rückschlagventil wirkt. Zum Unterschied zur bekannt Lösung wirkt erfindungsgemäß der Schließkörper mit der Dichtfläche nur unterhalb der vorbestimmten Druckgrenze als Rückschlagventil, während bei der bekannten Lösung das Rückschlagventil über den gesamten Rückstromdruckbereich sperrte.

Eine zweckmäßige Ausführungsform der Erfindung, die mit ihrem ein Außengewinde aufweisenden, hohlzylindrischen Grundkörper in einen Strömungskanal einschraubbar ist, ist dadurch gekennzeichnet, daß der Grundkörper zu beiden Seiten eines in der Länge begrenzten Außenge-windeabschnittes mit verringertem Außendurchmesser ausgebildet ist, daß der Außengewindeabschnitt zwei von seinen beiden Seiten in die Innenbohrung des Grundkörpers führende Strömungskanäle voneinander trennt, und daß die Wand der Innenbohrung zwischen den innenliegenden Mündungen der Strömungskanäle die als eine Zylinderfläche ausgebildete Dichtfläche für den in der Innenbohrung in einem Schiebesitz geführten Schließkörper bildet. Diese Ausbildung ist herstellungstechnisch günstig. Weiterhin ergeben sich bei ihr einfache Strömungsverhältnisse in beiden Strömungsrichtungen und für beide Strömungswege.

Günstige Strömungsverhältnisse sowie herstellungstechnische Vorteile ergeben sich bei einem weiteren Ausführungsbeispiel der Erfindung, hei dem der Schließkörper eine Kugel ist.

Weiterhin ist es zweckmäßig, daß im Grundkörper eine Hülse verschiebbar gelagert ist, an der ein Ventilsitz für den Schließkörper angeordnet ist, an welchem der Schließ-körper in der Sperrstellung und bei Bewegungen in die zweite und aus der zweiten Offenstellung anliegt, und daß die Feder die Hülse beaufschlagt. Die Feder greift hierbei nicht unmittelbar am Schließkörper an, sondern unter Zwischenschaltung der Hülse, die für eine einwandfreie Zentrierung der Feder sorgen kann. Zudem bildet die Hülse mit ihrem inneren Durchgang einen Teil des Arbeitsströmungsweges. Günstig ist auch, daß eich die Hülse besonders exakt an dem Anschlag abstützen läßt, wenn der Schließkörper in seiner Sperrstellung angelangt ist, so daß die Kraft der Feder nicht mehr weiter wirksam ist.

Ein unter baulichen und montagetechnischen Gesichtspunkten günstiges Ausführungsheispiel der Erfindung ist weiterhin dadurch gekennzeichnet, daß die Hülse einen quer-Fortsatz aufweist, der in einen längsverlaufenden und den Anschlag enthaltenden Schlitz im Grundkörper eingreift. In dem Schlitz läßt sich die Bewegung der Hülse sauber führen.

Bei dem Ausführungsbeispiel von Anspruch 6 bei dem der Fortsatz ein den im Durchmesser gegenüber dem Außen-gewindeabschnitt verringerten Grundkörperabschnitt diametral durchsetzender und in der Hülse festgelegter Querbolzen ist, gestaltet sich der Zusammenbau des Durchströmventils besonders einfach.

Im Hinblick darauf, daß ein wünschenswert großer Durchgangsguerschnitt erreicht wird und daß trotzdem das Druckbegrenzungsventil auf praktisch jede gewünschte Druckgrenze einstellbar wird, ist eine weitere Ausführungsform der Erfindung zweckmäßig, bei der die Enden des Querbolzens über den Außendurchmesser des Grundkörperabschnitts überstehen, und daß eine zusätzliche außen auf dem Grundkörperabschnitt geführte Feder an den Bolzenenden abgestützt ist. Der Schließkörper wird hierbei durch zwei Federn belastet, von denen trotz eines insgesamt hohen Beaufschlagungsdruckes jede verhältnismäßig grazil ausgebildet werden kann. Zwei derart parallel geschaltete Federn führen zudem zu einer wünschenswerten Federcharakteristik bzw. einem gleichmäßigen Ansprechen.

Baulich läßt sich dieses vorerwähnte Ziel auf besonders einfache Weise dadurch erreichen, daß die zusätzliche Feder zwischen zwei ringförmigen Federwiderlagern angeordnet ist, von denen sich ein Widerlager beweglich an den Bolzenenden und das andere Widerlager am Abschnitt abstützt.

Eine weitere, zweckmäßige Ausführungsform der Erfindung liegt vor, wenn die Übergänge vom Außengewindeabschnitt zu den im Außendurchmesser kleineren Grundkörperabschnitten als, vorzugsweise schräge, Ringschultern ausgebildet sind, und daß jeder Strömungskanal von einer Vielzahl in Umfangsrichtung verteilter und schräg gegen die Dichtfläche gerichteter Bohrungen in den Ringschultern gebildet wird. Bei dieser Ausbildung ergibtsich nicht nur ein wünschenswert großer Durchgangsquerschnitt in beiden Strömungsrichtungen, sondern es liegen auch eindeutige Strömungsverhältnisse mit nur geringem Strömungswiderstand vor. Zudem ist die Herstellung bei dieser Ausführungsform des Durchströmventils einfach, insbesondere was dessen Grundkörper anbelangt, der ein NC-Drehteil oder ein Gußteil sein kann.

Ein weiterer, wichtiger Gedanke ist bei einem weiteren Ausführungsbeispiel realisiert, das sich dadurch auszeichnet, daß an einem Stirnende des Grundkörpers ein durchbohrter Ansatz mit einer Aufnahme, z.B. einem Querschlitz, für ein Drehwerkzeug angeformt ist. Bei dieser Ausbildung wird das Einschrauben des Durchströmventils in einen ein Innengewinde aufweisenden Strömungskanal erleichtert.

Ein weiterer, wichtiger Gedanke der Erfindung besteht darin, daß am Außenumfang des Ansatzes, vorzugsweise diametral gegenüberliegende, Abflachungen vorgesehen sind, die vom freien Ende des Ansatzes zurücktretende Schultern bilden. Diese zurücktretenden Schultern gewährleisten ein ungehindertes An- bzw. Abströmen des Hydraulikmediums auch dann, wenn in den Strömungskanal hinter dem Durchströmventil der Druckmittelanschluß zu nahe an das Durchströmventil heranreicht (Ermetto-Schraubanschluß).

Schließlich zeichnet sich noch ein weiteres, vorteilhaftes Ausführungsbeispiel der Erfindung dadurch aus, daß der Grundkörper eine von der Stirnseite bis zum durchbohrten Ansatz glatt durchgehende Bohrung aufweist, deren Innendurchmesser höchstens dem Außendurchmesser des Schließkörpers entspricht, und daß im der Stirnseite zugewandten Ende der Bohrung eine herausnehmbare Sicherung für den Schließkörper sitzt. Bei diesem Ausführungsbeispiel ist die Herstellung besonders einfach, da es genügt, in den Grundkörper von der einen Stirnseite ausgehend eine durchgehende Bohrung einzubringen, die sowohl die Dichtfläche als auch die Schiebeführung für den Schließkörper und die Strömungswege bildet. Der Schließkörper kann einfach in diese Bohrung eingesetzt werden. Gegen ein unbeabsichtigtes Herausfallen wird er durch die Sicherung gehindert. Sein Austauschen ist jedoch nach Entnahme der Sicherung ohne weiteres möglich.

Im folgenden wird die Erfindung anhand eines im Längsschnitt dargestellten Ausführungsbeispieles erläutert.

Ein Durchströmventil 1 weist einen hohlzylindrischen Grundkörper 2 auf, dessen von einem Stirnende 3 ausgehende Innenbohrung mit 11 bezeichnet ist. Der Grundkörper 2 weist einen in der Länge begrenzten Außenge-windeabschnitt 5 an einem verdickten Erstreckungsbereich 4 auf, zu dessen beiden Seiten sich Grundkörperabschnitte 12 und 13 mit deutlich verringertem Außen-durchmesser anschließen. Die Übergänge vom Außenge-windebereich 5 zu den Grundkörperabschnitten 12 und 13 sind als schräge Ringschultern 14,15 ausgebildet.

Am der Stirnseite 3 abgewandten Ende des Grundkörpers 2 springt ein Ringflansch 6 einwärts vor, der außenseitig einen Ansatz 7 mit einem Querschlitz 8 als Aurnahme für ein Drehwerkzeug trägt. Der Ansatz 7 ist beispielsweise doppelseitig mit Abflachungen 9 versehen, die von der freien Stirnfläche des Ansatzes 7 zurückweichende Schultern bilden. Der Ansatz 7 wird von einer Bohrung 10 durchsetzt, die zur Innenbohrung 11 fßhrt. Die Bohrung 10 könnte ggf. als Innensechskant ausgebildet sein, um das Einschrauben des GrundkÖrpers 2 zu erleichtern. Dann könnte der Querschlitz 8 wegfallen.

Das Durchströmventil 1 wird mit seinem Außengewindeabschnitt 5 in einen Strömungskanal 34 mit Innengewinde eingeschraubt, wobei die in Eingriff stehenden Gewinde für eine Abdichtung in axialer Richtung sorgen.

In die schrägen Ringschultern 14, 15 sind in Umfangsrichtung verteilt schräge Strömungskanäle 16, 17 eingebracht, zweckmäßigerweise in Form von mehreren Bohrungen. Die innenliegenden Mündungen der Bohrungen 16,17 begrenzen eine Dichtfläche 18, die eine von der Wand der Innenbohrung 11 gebildete zylindrische Fläche ist.

In der Innenbohrung 11 ist, gesichert durch einen Ring 19, ein Schließkörper 20 in Form einer Kugel verschiebbar geführt. Der Außendurchmesser der Kugel entspricht annähernd dem Innendurchmesser der Innenbohrung 11, so daß sich ein leichter Schiebesitz für die Kugel 20 ergibt. Im Inneren des Grundkörperabschnittes 13 ist eine Hülse 21 verschiebbar untergebracht, die an ihrem dem Schließkörper 20 zugewandten Ende einen Ventilsitz 22 bildet, gegen den der Schließkörper 20 anlegbar ist.

An der Außenseite der Hülse 21 ist eine Schulter 24 als Widerlager für ein Ende einer Feder 25 vorgesehen, welche sich mit ihrem anderen Ende an dem Ringflansch 26 abstützt. Die Hülse 21 besitzt eine längsdurchgehende Bohrung 35. Sie wird von einem quer durchgehenden Zapfen 27 durchsetzt, der mit seinen Enden 30 durch im Grundkörperabschnitt 13 ausgebildete Längsschlitze 28 hindurchragt. Die der Dichtfläche 18 zugewandten Enden der Längsschlitze 28 bilden Anschläge 29 für den Querbolzen 27 und damit die Bewegung der Hülse 21 in Richtung zur Dichtfläche 18 hin.

Auf dem Außenumfang des Grundkörperabschnittes 13 ist ein erstes ringförmiges Federwiderlager 31 verschiebbar angebracht, an dem sich ein Ende einer weiteren Feder 32 abstützt, die mit ihrem anderen Ende an einem ebenfalls ringförmigen und auf dem Grundkörperabschnitt fest oder in Längsrichtung verstellbar angebrachten Widerlager 33 abstßtzt. Das Widerlager 31 liegt an den Enden 30 des Querbolzens 27 an.

Das Durchströmventil 1 wird in mit P bezeichneter Arbeitsströmungsrichtung durchströmt, wobei die mit Pfeilen versehenen Buchstaben A die Teile des Strömungsdurchganges hervorheben, die den Arbeitsströmungsweg bilden. In dazu entgegengesetzter Strömungsrichtung L wird das Durchströmventil 1 von der Rückströmung durchströmt. Mit Richtungspfeilen versehene Buchstaben R zeigen diejenigen Teile des Strömungsdurchganges an, die den Rückströmungsweg bilden.

Die Anschläge 29 sind derart angeordnet, daß die Hülse 21 unter der Belastung der Federn 32 und 25 nur so weit in Richtung zur Dichtfläche 18 hin verfahren werden kann, daß der am Ventilsitz 22 anliegende Schließkörper 20 mit der Dichtfläche 18 sperrend zusammenarbeitet. Aus dieser Sperrstellung, die mit 1 bezeichnet ist, läßt sich der Schließkörper 20 in eine erste Offenstellung II frei verschieben, während er sich in Richtung auf eine zweite Offentellung III zu gegen die Kraft der Federn 25 und 32 bewegen läßt.

Das Durchströmventil 1 arbeitet wie folgt:
Sobald in Arbeitsströmungsrichtung P Druck aufgebaut wird, steht dieser bei in der Sperrstellung I befindlichem Schließkörper 20 innerhalb des Ventilsitzes 22 an dem Schließkörper an und über die Strömungskanäle 17 auch an dem Oberflächenbereich des Schließkörpers, der außerhalb des Ventilsitzes 22 liegt. Der Schließkörper 20 wird dadurch in seine erste Offenstellung II bewegt, in der die Strömungskanäle 16 voll geöffnet sind. Der Schließkörper 20 liegt dann entweder an der Sicherung 19 an oder an einem nicht dargestellten Anschlagteil. Das Hydraulikmedium strömt dann durch die Innenbohrung 35 der Hülse 21 und durch die Strömungskanäle 17 und gelangt durch die Strömungskanäle 16 schließlich zum Verbraucher. Die Hülse 21 ist über den Querbolzen 27 an den Anschlägen 29 abgefangen und vermag der Bewegung des Schließkörpers 2 nicht zu folgen.

Wenn nun eine Rückströmung eintritt, ergibt sich für den Schließkörper 20 ein dynamischer Impuls, der ihn aus der ersten Offenstellung II zunächst wieder in die Sperrstellung I zurückführt, wo er am Ventilsitz 22 abgefangen wird. Unterhalb einer durch die Vorspannkraft der Federn 25 und 32 bestimmten Grenze des Rückströmungsdruckes bildet der Schließkörper 20 mit der Dichtfläche 18 ein Rückschlagventil, das jegliche Rückströmung unterbindet. Erst wenn der Rückströmungsdruck so hoch angewachsen ist, daß er über den Schließkörper 20 die Kraft der Federn 25 und 32 zu überwinden vermag, schiebt der Schlieskörper 20 die Hülse 21 in Richtung zum Ansatz 7 und gibt allmählich den Durchgang zu den Strömungskanälen 17 frei. Der Strömungsweg der Innenbohrung 35 der Hülse 21 bleibt dabei weiterhin verschlossen. Über die Hülse 21 und den Querbolzen 27 sowie das Widerlager 31 wird gleichzeitig auch die äußere Feder 32 verformt. Sobald der Rückströmdruck wiederum unter die vorerwähnte Grenze absinkt, drücken die Federn 25 und 32 den Schließkörper 20 wieder in die Sperrstellung I, so daß keine weitere-Strömung mehr stattfindet.

Es liegt auf der Hand, daß der Aufbau des Druckströmventils dadurch vereinfacht werden kann, daß nur eine einzige Feder zur Belastung des Schließkörpers vorgesehen wird, die dann entweder innerhalb oder außer-halb des Abschnittes 13 angeordnet wird. Zusätzlich ist es auch denkbar, daß der Schließkörper in Richtung auf den Ventilsitz 22 zu von einer schwachen Feder belastet wird, die ihn stets in seiner Sperrstellung I hält, wenn keine Druckbeaufschlagung vorliegt. Bei einer vereinfachten Ausführungsform kann die Hülse 21 auch weggelassen werden und die innenliegende Feder 25 unmittelbar auf den Schließkörper 20 einwirken. Dann müssen in der Innenbohrung 11 entsprechende Anschläge dafür sorgen, daß der Beaufschlagungshub der Feder 25 begrenzt wird.

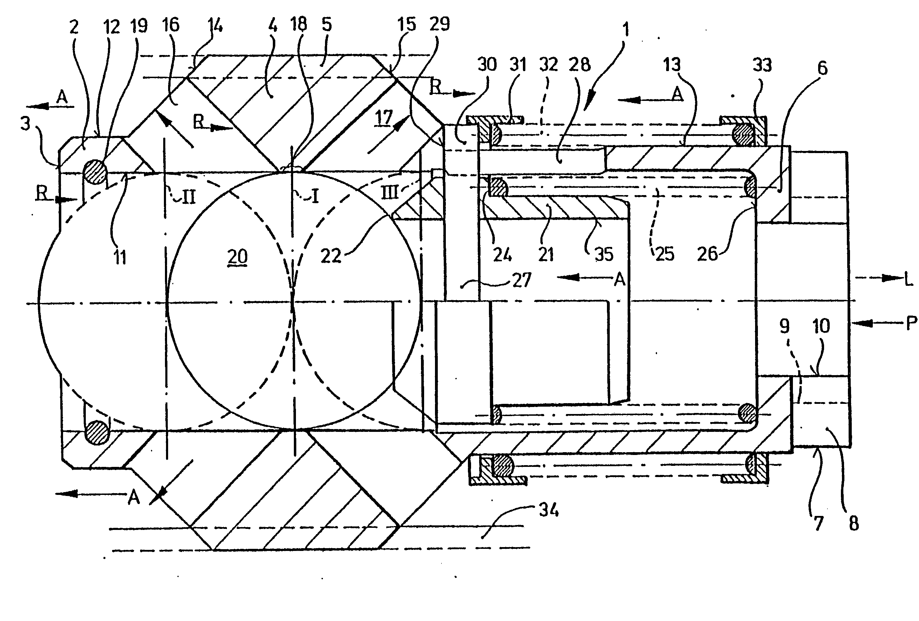

**Patentansprüche**

1. Durchströmventil mit einem Strömungsdurchgang, der einen Arbeitsströmungsweg (A) und einen Rückströmungsweg (R) aufweist, mit einer Rückschlagfunktion im Arbeitsströmungsweg (A), wobei der Arbeitsströmungsweg (A) vom Arbeitsdruck freigegeben wird, und mit einer Druckbegrenzungsfunktion im Rückströmungsweg (R), wobei unterhalb einer bestimmten Druckgrenze der Rückströmungsweg (R) gesperrt ist, dadurch gekennzeichnet, daß beide Funktionen von einem einzigen Schließkörper (20), der mit einer Dichtfläche (18) zusammenarbeitet, ausgeübt werden, daß beide Strömungswege (A,R) über diese gemeinsame Dichtfläche (18) geführt sind, daß der Schließkörper (20) aus seiner, den Arbeits- und den Rückströmungsweg sperrenden Sperrstellung (I) vom Arbeitsdruck in Arbeitsströmungsrichtung (P) in eine erste Offenstellung (II) von der Dichtfläche (18) wegbewegbar ist, in der er den Arbeitsströmungsweg (A) freigibt, daß der Schließkörper (20) aus seiner Sperrstellung (I) vom Rückströmungsdruck in Rückströmungsrichtung (L) gegen die Kraft einer Feder (25,32) in eine zweite Offenstellung (III) bewegbar ist, in der er den Rückströmungsweg (R) freigibt, daß der Schließkörper (20) in seiner Sperrstellung (I) an der Dichtfläche (18) anliegt und mit der Feder (25,32) in Kontakt ist, und daß in der Sperrstellung (I) des Schließkörpers (20) der Weg der Feder (25, 32) in Bewegungsrichtung des Schließkörpers (20) zur ersten Offenstellung (II) durch einen Anschlag (29) begrenzt ist.

2. Durchströmventil nach Anspruch 1, das mit seinem ein Außengewinde (5) aufweisenden, hohlzylindrischen Grundkörper (2) in einen Strömungskanal (34) einschraubbar ist, dadurch gekennzeichnet, daß der Grundkörper (2) zu beiden Seiten eines in der Länge begrenzten Außengewindeabschnittes (5) mit verringertem Aussendurchmesser ausgebildet ist, daß der Außengewindeabschnitt (5) zwei von seinen beiden Seiten in die Innenbohrung (11) des Grundkörpers (2) führende Strömungskanäle (16,17) voneinander trennt, und daß die Wand der Innenbohrung zwischen den innenliegenden Mündungen der Strömungskanäle (16,17) die als eine Zylinderfläche ausgebildete Dichtfläche (18) für den in der Innenbohrung in einem Schiebesitz geführten Schließkörper (20) bildet.

3. Durchströmventil nach den Ansprüchen 1 und 2, dadurch gekennzeichnet, daß der Schließkörper (20) eine Kugel ist.

4. Durchströmventil nach den Ansprüchen 1 bis 3, dadurch gekennzeichnet, daß im Grundkörper (2) eine Hülse (21) verschiebbar gelagert ist, an der ein Ventilsitz (22) für den Schließkörper (20) angeordnet ist, an welchem der Schließkörper (20) in der Sperrstellung (I) und bei Bewegungen in die zweite und aus der zweiten Offenstellung (III) anliegt, und daß die Feder (25) die Hülse (21) beaufschlagt.

5. Durchströmventil nach Anspruch 4, dadurch gekennzeichnet, daß die Hülse (21) einen Quer-Fortsatz aufweist, der in einen längsverlaufenden und den Anschlag (29) enthaltenden Schlitz (28) im Grundkörper (2) eingreift.

6. Durchströmventil nach Anspruch 5, dadurch gekennzeichnet, daß der Fortsatz ein den im Durchmesser gegenüber dem Außengewindeabschnitt (5) verringerten Grundkörperabschnitt (13) diametral durchsetzender und in der Hülse (21) festgelegter Querbolzen (27) ist.

7. Durchströmventil nach Anspruch 6, dadurch gekennzeichnet, daß die Enden (30) des Querbolzens (27) über den Außendurchmesser des Grundkörperabschnitts (13) überstehen, und daß eine zusätzliche, aussen auf dem Grundkörper-Abschnitt geführte Feder (32) an den Bolzenenden (30) abgestützt ist.

8. Durchströmventil nach Anspruch 7, dadurch gekennzeichnet, daß die zusätzliche Feder (32) zwischen zwei ringförmigen Federwiderlagern (31 und 33) angeordnet ist, von denen sich das Widerlager (31) beweglich an den Bolzenenden (30) und das Widerlager (33) am Abschnitt (13) abstützt.

9. Durchströmventil nach den Ansprücben 1 bis 8, dadurch gekennzeichnet, daß die Übergänge (14,15) vom Außengewindeabschnitt (5) zu den im Außendurchmesser kleineren Grundkörperabschnitten (12,13) als, vorzugsweise schräge, Ringschultern ausgebildet sind, und daß jeder Strömungskanal (16,17) veneiner Vielzahl in Umfangsrichtung verteilter und schräg gegen die Dichtfläche (18) gerichteter Bohrungen in den Ringschultern gebildet wird.

10. Durchströmventil nach den Ansprüchen 1 bis 9, dadurch gekennzeichnet, daß an einem Stirnende des Grundkörpers (2) ein durchbohrter Ansatz (7) mit einer Aufnahme (8), z.B. einem Querschlitz, für ein Drehwerkzeug angeformt ist.

11. Durchströmventil nach Anspruch 10, dadurch gekennzeichnet, daß am Außenumfang des Ansatzes (7), vorzugsweise diametral gegenüberliegende, Abflachungen (9) vorgesehen sind, die vom freien Ende des Ansatzeszurücktretende Schultern bilden.

12. Durchströmventil nach den Ansprüchen 1 bis 11, dadurch gekennzeichnet, daß der Grundkörper (2) eine von der Stirnseite (3) bis zum durchbohrten Ansatz (7) glatt durchgehende Bohrung (11) aufweist, deren Innendurchmesser höchstens dem Außendurchmesser des Schließkörpers (20) entspricht, und daß im der Stirnseite (3) zugewandten Ende der Bohrung eine herausnehmbare Sicherung (19) für den Schließkörper (20) sitzt.

**Claims**

1. A through-flow valve having a through-flow passage including a working flowpath (A) and a return flowpath (R) with a check valve function in the working flowpath (A), said working flowpath (A) being deblocked by the working pressure, and a pressure limiting function in the return flowpath (R), said return flowpath (R) being blocked below a determined pressure limit, characterized in that both functions are carried out by a single closure body (20) cooperating with a sealing surface (18), that both flowpaths (A, R) extend past this common sealing surface (18), that said closure body (20) is adapted to be moved by the working pressure from its blocking position (I) blocking the working and the return flowpaths in the working flow (P) direction away from said sealing surface (18) to a first open position (II) in which it deblocks the working flowpath, that said closure body (20) is adapted to be moved by the return flow pressure from its blocking position (I) in the return flow direction (L) against the force of a spring (25, 32) to a second open position (III) in which it deblocks the return flowpath (R), that in its blocking position (I) said closure body (20) engages said sealing surface (18) and is in contact with said spring (25, 32), and that in the blocking position (I) of said closure body (20) the stroke of said spring (25, 32) in the displacement direction of said closure body (20) towards said first open position (II) is limited by a stop (29).

2. A through-flow valve according to claim 1, adapted to be threaded into a flow channel (34) with its hollowcylindrical main body (2) having an outer thread (5), characterized in that said main body (2) is formed with a reduced outer diameter on both sides of an outer thread portion (5) of limited length, that said outer thread portion (5) separates two flow channels (16, 17) leading from both of its sides into the interior bore (11) of said main body (2) from one another, and that between the inner openings of said flow channels (16, 17) the wall of said inner bore forms a cylindrical surface acting as said sealing surface (18) for said closure body (20) displaceably guided in said interior bore in a sliding fit.

3. A through-flow valve according to claims 1 and 2, characterized in that said closure body (20) is a ball.

4. A through-flow valve according to claims 1 to 3, characterized in that a sleeve (21) is slidably mounted in said main body (2) and provided with a valve seat (22) for said closure body (20), which is engaged by said closure body (20) in its blocking position (I) and during its movements into and from said second open position (III), and that said spring (25) acts on said sleeve (21).

5. A through-flow valve according to claim 4, characterized in that said sleeve (21) has a lateral projection engaging a longitudinally extending slot (28) in said main body (2) containing said stop (29).

6. A through-flow valve according to claim 5, characterized in that said projection is a transverse bolt (27) extending diametrally through the main body portion (13) having a reduced diameter with respect to said outer thread portion (5), and fixedly secured in said sleeve (21).

7. A through-flow valve according to claim 6, characterized in that the ends (30) of said transverse bolt (27) project beyond the outer diameter of said main body portion (13), and that an additional spring (32) guided on the outside of said main body portion is supported on said bolt ends (30).

8. A through-flow valve according to claim 7, characterized in that said additional spring (32) is disposed between two annular spring supports (31 and 33), of which spring support (31) is movably supported on said bolt ends (30) and spring support (33), on said body portion (13).

9. A through-flow valve according to claims 1 to 8, characterized in that the transitions (14, 15) from said outer thread portion (5) to said reduced diameter main body portions (12, 13) are formed as preferably inclined annular shoulders, and that each flow channel (16, 17) is formed by a plurality of bores in said annular shoulders distributed in the circumferential direction and directed towards said sealing surface (18) at an inclined angle.

10. A through-flow valve according to claims 1 to 9, characterized in that one longitudinal end of said main body (2) is integrally formed with a perforate extension (7) having engagement means (8), for instance a transverse slot, for a turning tool.

11. A through-flow valve according to claim 10, characterized in that the outer periphery of said extension (7) is provided, preferably at diametrally opposite locations, with flat surface portions (9) forming shoulders recessed from the free end of said extension.

12. A through-flow valve according to claims 1 to 11, characterized in that said main body (2) has a bore (11) continuously extending from said longitudinal end (3) to said perforate extension (7), the inner diameter of said bore being no more than the outer diameter of said closure body (20), that a removable retainer (19) for said closure body (20) is seated in the end of said bore adjacent said longitudinal end (3).

## Revendications

1. Soupape à passage direct avec un passage pour l'écoulement comprenant un chemin pour l'écoulement de travail (A) et un chemin pour l'écoulement de retour (R) avec une fonction anti-retour dans le chemin de l'écoulement de travail (A), ce chemin de l'écoulement de travail (A) étant libéré par la pression de travail, et une fonction de limitation de pression dans le chemin de l'écoulement de retour (R), ce chemin de l'écoulement de retour (R) étant fermé au-dessous d'une limite de pression déterminée, caractérisée en ce que les deux fonctions sont remplies par un unique corps de fermeture (20) qui travaille en combinaison avec une surface d'étanchéité (18), que les deux chemins d'écoulement (A, R) passent le long de cette surface d'étanchéité commune (18), que le corps de fermeture (20) peut être déplacé de la surface d'étanchéité (18) par la pression de travail, dans la direction de l'écoulement de travail (P), de sa position de fermeture (I), dans laquelle il ferme le chemin de l'écoulement de travail et de l'écoulement de retour, pour être amené à une première position d'ouverture (II), dans laquelle il libère le chemin de l'écoulement de travail (A), que le corps de fermeture peut être déplacé de sa position de fermeture (1) par la pression de l'écoulement de retour (L) dans la direction de cet écoulement de retour (L), contre la force d'un ressort (25, 32), pour venir à une seconde position d'ouverture (III), dans laquelle il libère le chemin de l'écoulement de retour (R), que le corps de fermeture (20) est contigu à la surface d'étanchéité (18) et en contact avec le ressort (25, 32) à sa position de fermeture (I) et que, à la position de fermeture (I) du corps de fermeture (20), la course du ressort (25, 32) dans la direction du mouvement dudit corps de fermeture (20) vers la première position d'ouverture (II), est limitée par une butée (29).

2. Soupape à passage direct selon la revendication 1, pouvant être vissée dans un canal d'écoulement (34) par son corps de soupape cylindrique creux (2) comportant un filetage extérieur (5), caractérisée en ce que le corps de soupape (2) a un diamètre extérieur diminué des deux côtés d'une partie à filetage extérieur (5) de longueur limitée, que cette partie à filetage extérieur (5) sépare deux canaux d'écoulement (16, 17) partant de ses deux côtés et débouchant dans l'alésage (11) du corps de soupape (2), et que la paroi de cet alésage (11) comprise entre les orifices intérieurs des canaux d'écoulement (16, 17) forme une surface d'étanchéité (18) de forme cylindrique pour le corps de fermeture (20) guidé dans une portée de glissement dans l'alésage (11).

3. Soupape à passage direct selon les revendications 1 et 2, caractérisée en ce que le corps de fermeture (20) est une sphere.

4. Soupape à passage direct selon les revendications 1 à 3, caractérisée en ce qu'une douille (21) est montée coulissante dans le corps de soupape (2), cette douille comportant un siège de soupape (22) pour le corps de fermeture (20), celui-ci étant appuyé contre ledit siège de soupape (22) à la position de fermeture (I) et lors de ses mouvements en direction de la seconde position d'ouverture (III) et à partir de cette position, et que le ressort (25) pousse la douille (21).

5. Soupape à passage direct selon la revendication 4, caractérisée en ce que la douille (21) comporte un appendice transversal qui s'engage dans une fente longitudinale (28) ménagée dans le corps de soupape (2) et contenant la butée (29).

6. Soupape à passage direct selon la revendication 5, caractérisée en ce que l'appendice est une clavette transversale (27) traversant diamétralement la partie (13) du corps de soupape (2) à diamètre diminué par rapport à la partie à filetage extérieur (5), et fixée dans la douille (21).

7. Soupape à passage direct selon la revendication 6, caractérisée en ce que les extrémités (30) de la clavette transversale (27) dépassent du diamètre extérieur de la partie (13) du corps de soupape et qu'un ressort supplémentaire (32) monté à l'extérieur de cette partie (13) et guidé par celleci, prend appui contre les extrémités de la clavette transversale (30).

8. Soupape à passage direct selon la revendication 7, caractérisée en ce que le ressort supplémentaire (32) est monté entre deux butées de ressort de forme annulaire (31) et (32), la butée (31) prenant appui, de façon mobile, contre les extrémités (30) de la clavette (27) tandis que la butée (33) prend appui contre la partie (13) du corps de soupape (2).

9. Soupape à passage direct selon les revendications 1 à 8 caractérisée en ce que les surfaces de transition (14, 15) entre la partie à filetage extérieur (5) du corps de soupape (2) et les parties à diamètre extérieur plus petit (12, 13) sont réalisées sous la forme d'épaulements annulaires, de préférence obliques, et que chaque canal d'écoulement (16, 17) est formé d'un certain nombre de trous répartis dans la direction périphérique de l'épaulement et orientés obliquement par rapport à la surface d'étanchéité (18).

10. Soupape à passage direct selon les revendications 1 à 9, caractérisée en ce qu'un prolongement percé complètement (7) et comportant un moyen de prise (8) tel qu'une fente transversale, par exemple, est prévu à une extrémité du corps de soupape (2) pour recevoir un outil de mise en rotation.

11. Soupape à passage direct selon la revendication 10, caractérisée en ce que des plats (9), de préférence diamétralement opposés, sont prévus sur la surface extérieure du prolongement (7) et forment des épaulements en retrait par rapport à l'extrémité libre dudit prolongement (7).

12. Soupape à passage direct selon les revendications 1 à 11, caractérisée en ce que le corps de soupape (2) comporte un alésage lisse (11) allant de la face extrême (3) jusqu'au prolongement percé complètement (7), dont le diamètre est égal au diamètre extérieur du corps de fermeture (20), et qu'à l'extrémité de cet alésage (11) tournée du côté de la face extrême (3), un anneau élastique amovible (19) est monté pour retenir le corps de fermeture (20).

0 093 783

1/1